(19) Europäisches Patentamt

European Patent Office

Office européen des brevets

(11) **EP 1 502 128 B1**

(12) **EUROPÄISCHE PATENTSCHRIFT**

(45) Veröffentlichungstag und Bekanntmachung des Hinweises auf die Patenterteilung:
**05.04.2006 Patentblatt 2006/14**

(21) Anmeldenummer: **02796722.3**

(22) Anmeldetag: **23.12.2002**

(51) Int Cl.:
**G01T 1/17** (2006.01)

(86) Internationale Anmeldenummer:
**PCT/EP2002/014710**

(87) Internationale Veröffentlichungsnummer:
**WO 2003/060557 (24.07.2003 Gazette 2003/30)**

(54) **VERFAHREN ZUR ZUORDNUNG EINES PULSVERLAUFES ZU EINEM VON EINER MEHRZAHL VON PULSTYPEN VERSCHIEDENER ABKLINGZEIT UND VORRICHTUNG ZU DESSEN DURCHFUEHRUNG**

METHOD FOR ASSIGNING A PULSE RESPONSE TO ONE OF A PLURALITY OF PULSE TYPES WITH DIFFERENT DECAY TIMES AND DEVICE FOR CARRYING OUT SAID METHOD

PROCEDE POUR L'AFFECTATION D'UNE COURBE D'IMPULSION A UN PARMI UNE PLURALITE DE TYPES D'IMPULSION A CONSTANTE DE DECROISSANCE DIFFERENTE ET DISPOSITIF POUR L'EXECUTION DE CE PROCEDE

(84) Benannte Vertragsstaaten:
**AT BE BG CH CY CZ DE DK EE ES FI FR GB GR IE IT LI LU MC NL PT SE SI SK TR**

(30) Priorität: **21.01.2002 DE 10201995**

(43) Veröffentlichungstag der Anmeldung:
**02.02.2005 Patentblatt 2005/05**

(73) Patentinhaber: **Forschungszentrum Jülich GmbH 52425 Jülich (DE)**

(72) Erfinder:
• **SALEH, Hassan**
  **Giza (EG)**
• **ZIMMERMANN, Egon**
  **52459 Inden (DE)**
• **HALLING, Horst**
  **52459 Inden-Pier (DE)**

(74) Vertreter: **Paul, Dieter-Alfred et al**
  **Paul & Albrecht,**
  **Patentanwaltssozietät,**
  **Hellersbergstrasse 18**
  **41460 Neuss (DE)**

(56) Entgegenhaltungen:
DE-A- 19 835 671     US-A- 4 870 667
US-A- 5 347 129      US-A- 5 866 907
US-B1- 6 194 728

• SCHMAND W ET AL: "ADVANTAGES USING PULSE SHAPE DISCRIMINATION TO ASSIGN THE DEPTH DETECTOR. OF INTERACTION INFORMATION (DOI) FROM A MULTI LAYER PHOSWICH" IEEE TRANSACTIONS ON NUCLEAR SCIENCE, IEEE INC. NEW YORK, US, Bd. 46, Nr. 4, PART 2, August 1999 (1999-08), Seiten 985-990, XP000873887 ISSN: 0018-9499

**Beschreibung**

Die Erfindung betrifft ein Verfahren zur Zuordnung eines Pulsverlaufes zu einem von einer Mehrzahl von Pulstypen verschiedener Abklingzeit, insbesondere eines Pulsverlaufes eines Szintillationsdetektors mit zumindest zwei Szintillationsmaterialien unterschiedlicher Abklingcharakteristik. Des weiteren betrifft die Erfindung eine Vorrichtung zur Durchführung des Verfahrens.

In der Nuklearmedizin werden radioaktiv markierte Substanzen zur in-vivo Messung physiologischer Prozesse verwendet. Eine empfindliche nuklearmedizinische Methode ist die Positronen-Emissions-Tomographie (PET). Dabei werden Isotope verwendet, die unter Aussendung eines Positrons zerfallen. Ein besonderer Reiz dieses Verfahrens besteht darin, daß einige der physiologisch interessantesten Elemente, wie Kohlenstoff, Stickstoff oder Sauerstoff kurzlebige radioaktive Isotope haben, die beim Zerfall ein Positron emittieren. Das ausgesandte Positron annihiliert im Gewebe innerhalb einer Strecke von 1-2 mm mit einem Elektron und erzeugt zwei, in entgegengesetzte Richtungen ausgesandte Gammaquanten einer Energie von 511 keV. Die gleichzeitige Detektion der Gammaquanten in gegenüberliegenden Detektoren, die üblicherweise in einem Detektorring angeordnet sind, bildet die Grundlage für eine tomographische Bildrekonstruktion.

Jeder Detektor des Rings enthält einen Szintillationskristall, der beim Auftreffen eines Gammaquants einen Lichtblitz mit einer für das Szintillationsmaterial charakteristischen Abklingzeit aussendet. Beispielsweise weist das oft verwendete Wismutgermanat (BSO) eine Abklingzeit von 300 ns auf, was zusammen mit der relativ geringen Lichtausbeute die erreichbare Ortsauflösung beschränkt. Neuere Szintillationsmaterialien mit großem Potential für PET-Anwendungen umfassen Lutetium-Oxyorthosilikat (LSO) mit einer 8-fach höheren Lichtausbeute als BSO und einer Abklingzeit von 40 ns, und LuAP (LuAlO$_3$) mit einer Abklingzeit von 17 ns. Die Lichtpulse der Szintillatorkristalle werden von einem Photodetektor, typischerweise einem Photovervielfacher oder einer Photodiode erfaßt, der zur Weiterverarbeitung geeignete elektrische Signale ausgibt.

Moderne Detektoren enthalten zur Steigerung der Ortsauflösung zwei oder mehr verschiedene Szintillationskristalle mit unterschiedlichen Abklingzeiten, die mit demselben Photodetektor gekoppelt sind. Durch eine Analyse der Ausgabesignale des Photodetektors kann aufgrund der verschiedenen Abklingzeiten bestimmt werden, welcher Detektorkristall angesprochen hat, und somit die Wechselwirkungstiefe (depth of interaction, DOI) im Detektor erfaßt werden.

Um diese Zuordnung der Photodetektor-Ausgabesignale zu einem der Szintillationskristalle durchzuführen, wird üblicherweise ein integrierender Verstärker beim Auslesen der Photodetektorsignale eingesetzt. Ein Vergleich der Anstiegszeit (definiert als die Zeit von 10% bis 90% des Maximalwerts) erlaubt dann eine Unterscheidung der verschiedenen Detektorpulse.

In einem anderen Ansatz wird für jedes Detektorsignal ein Startwert (Start des Pulses) und ein Stopwert (Ende des Pulses, bzw erster Nulldurchgang) erzeugt. Ein Zeit-zu-Amplituden-Wandler liefert dann ein Ausgangssignal mit einer Amplitude, die der Zeitdauer zwischen dem Start- und Stopwert proportional ist, und das zur Diskriminierung der Detektorpulse verwendet werden kann.

Die US-A-5 347 129 beschreibt den Vergleich eines elektrischen Signals, das den Ausgangspulsverlauf eines Detektors repräsentiert, mit einem vorbestimmten Referenzverlauf mittels Fourier Analysen. Dadurch ist es möglich das elektrische Signal einem oder mehrerer Pulstypen zuzuordnen.

Allen genannten Unterscheidungs- und Zuordnungsverfahren ist gemein, daß sie eine niedrige Zuverlässigkeit bei verrauschten Signalen aufweisen und eine hohe Abtastrate für die zuzuordnenden Signalpulse erfordern.

Der Erfindung, liegt daher die Aufgabe zugrunde, ein Verfahren der eingangs genannten Art anzugeben, das eine im Hinblick auf Abtastrate effiziente und zuverlässige Zuordnung eines Pulsverlaufs zu einem von einer Mehrzahl von Pulstypen verschiedener Abklingzeit ermöglicht.

Diese Aufgabe wird erfindungsgemäß durch ein Verfahren zur Zuordnung eines Pulsverlaufes zu einem von einer Mehrzahl von Pulstypen verschiedener Abklingzeit, insbesondere eines Pulsverlaufes eines Szintillationsdetektors mit zumindest zwei Szintillationsmaterialien unterschiedlicher Abklingcharakteristik gelöst, das die Verfahrenschritte umfaßt:

-  Aufnehmen eines Ausgangspulsverlaufes und Wandeln des Pulsverlaufes in ein elektrisches Signal, dessen Amplituden-Zeit-Verlauf den Pulsverlauf des Ausgangspulses repräsentiert;

-  Transformieren des Amplituden-Zeit-Verlaufs in den Frequenzraum um einen den Ausgangspuls repräsentierenden Amplituden-Frequenz-Verlauf zu erhalten;

-  Normieren des Amplituden-Frequenz-Verlaufs um einen normierten Amplituden-Frequenz-Verlauf zu erhalten;

-  Vergleichen des normierten Amplituden-Frequenz-Verlaufs mit einem vorbestimmten Referenzverlauf; und

- Zuordnen des Ausgangspulsverlaufs zu einem der Pulstypen auf Grundlage des Ergebnisses des Vergleichs.

Die Erfindung beruht damit auf dem Gedanken, die Zuordnung zu einem der Pulstypen nicht im Zeitraum, sondern im Frequenzraum durchzuführen. Dazu werden die gemessenen Pulsverläufe nach ihrer Transformation normiert und mit einem Referenzverlauf verglichen, der gleichsam einen Grenzverlauf zwischen zwei verschiedenen Pulstypen darstellt. Aus dem Ergebnis dieses Vergleichs kann dann der gemessene Pulsverlauf einem der Pulstypen zugeordnet werden. Dabei erfordert ein Unterscheidung zwischen zwei Pulstypen in der Regel einen Vergleich. Wird eine Zuordnung zu einem von mehr als zwei Pulstypen vorgenommen, können auch mehrerer Vergleiche mit mehr als einem Referenzverlauf erforderlich sein.

Die Ausführung des Vergleichs im Frequenzraum kann bei höherer Zuverlässigkeit wesentlich effektiver (geringere Abtastrate) erfolgen als im Zeitraum. Zugleich stehen effiziente Algorithmen zur Verfügung um den Zeitverlauf des gemessenen Pulses in den Frequenzraum zu transformieren.

In einer bevorzugten Ausgestaltung des Verfahrens wird das elektrische Signal vor der Transformation in den Frequenzraum einer Analog/Digital-Wandlung mit einer vorbestimmten Abtastrate unterzogen, um einen den Ausgangspuls repräsentierenden, diskreten Amplituden-Zeit-Verlauf zu erhalten.

Zweckmäßig wird bei dem erfindungsgemäßen Verfahren bei dem Schritt des Transformierens der diskrete Amplituden-zeit-Verlauf einer diskreten Fouriertransformation (DFT) unterzogen, um einen diskreten Amplituden-Frequenz-Verlauf zu erhalten. Insbesondere kann die diskrete Fouriertransformation mit einer schnellen Fouriertransformation (FFT) berechnet werden.

Bei dem Schritt des Normierens wird vorteilhafterweise der Amplituden-Frequenz-Verlauf auf die Amplitude bei der Frequenz Null bezogen, insbesondere wird der Amplituden-Frequenz-Verlauf zweckmäßig durch die Amplitude bei der Frequenz Null geteilt.

In einer bevorzugten Weiterbildung des erfindungsgemäßen Verfahrens wird bei dem Schritt des Vergleichens der Differenz-Verlauf des normierten Amplituden-Frequenz-Verlaufs und des Referenzverlaufs gebildet, der Differenz-Verlauf für jede Frequenz mit einem vorbestimmten Wichtungsfaktor multipliziert, und als Zuordnungsparameter die Summe dieser Produkte über alle Frequenzen berechnet.

Dabei kann die Zuordnung zu einem der Pulstypen auf Grundlage des Vorzeichens und/oder des Betrags des Zuordnungsparameters erfolgen. Insbesondere kann im Fall, wo der Ausgangspulsverlauf einem von zwei Pulstypen verschiedener Abklingzeit zugeordnet wird, die Zuordnung auf Grundlage nur des Vorzeichens des Zuordnungsparameters erfolgen. Dies gestattet einen besonderes einfache Entscheidung über die Zuordnung eines gemessene Pulses zu einer der Pulstypen.

Der Wichtungsfaktor ist in einer Ausgestaltung des Verfahrens derart gewählt, daß er ein Maximum bei kleinen Frequenzen hat und zu großen Frequenzen hin abnimmt. Dies trägt der Beobachtung Rechnung, daß die niedrigeren Frequenzen stärker als höhere Frequenzen zur Diskriminierung der Pulstypen beitragen.

Dabei ist es im vorstehend erläuterten Zusammenhang bevorzugt, wenn die hochfrequenten Komponenten des elektrischen Signals vor der Transformation in den Frequenzraum durch ein Tiefpaßfilter unterdrückt werden. Hierdurch können störende Rückfaltungen von Signalen, deren Frequenz höher als die halbe Abtastrate liegt, bei der Digitalisierung (ADC) des Signals vermieden werden.

Das Verfahren kann in besonders vorteilhafter Weise dadurch weitergebildet sein, daß vor dem Aufnehmen zuzuordnender Pulsverläufe ein Referenzverlauf bestimmt wird durch

- Aufnehmen von Eichpulsverläufen mit bekannter Zuordnung zu zwei Pulstypen mit verschiedener Abklingzeit und Wandeln jeweils des Pulsverlaufes in ein elektrisches Signal, dessen Amplituden-Zeit-Verlauf den Pulsverlauf des Eichpulses repräsentiert;

- Transformieren jeweils des Amplituden-Zeit-Verlaufs in den Frequenzraum um einen den Eichpuls repräsentierenden Amplituden-Frequenz-Verlauf zu erhalten;

- Normieren des Amplituden-Frequenz-Verlaufs um einen normierten Amplituden-Frequenz-Verlauf zu erhalten; und

- Festlegen eines Referenzwertes für jede Frequenz derart, daß die Amplitudenwerte der Eichpulse des ersten Pulstyps für diese Frequenz im wesentlichen größer als der Referenzwert, und die Amplitudenwerte der Eichpulse des zweiten Pulstyps für diese Frequenz im wesentlichen kleiner als der Referenzwert sind.

Insbesondere kann der Referenzwert für jede Frequenz mit Vorteil dadurch festgelegt werden, daß jeweils ein Amplituden-Histogramm für die verschiedenen Pulstypen aufgestellt wird, der Schnittpunkt der Einhüllenden der Histogramme bestimmt wird, und der bestimmte Schnittpunkt als der Referenzwert festgelegt wird.

Als besonders vorteilhaft wird es im vorstehend erläuterten Zusammenhang angesehen, wenn vor dem Aufnehmen zuzuordnender Pulsverläufe der Wichtungsfaktor für jede Frequenz bestimmt wird durch

- Bestimmen des mittleren Betrags der Abweichung der Amplitudenwerte von dem Referenzwert für diese Frequenz für jeden der Pulstypen; und

- Festlegen eine hohen Wichtung für diese Frequenz bei einem großen mittleren Abweichungsbetrag und einer niedrigen Wichtung für diese Frequenz bei einem niedrigen mittleren Abweichungsbetrag.

Eine erfindungsgemäße Vorrichtung zur Durchführung des beschriebenen Verfahrens umfaßt

- ein Mittel zum Aufnehmen eines Ausgangspulsverlaufes und einem Mittel zum Wandeln des Pulsverlaufes in ein elektrisches Signal, dessen Amplituden-Zeit-Verlauf den Pulsverlauf des Ausgangspulses repräsentiert;

- ein Mittel zum Transformieren des Amplituden-Zeit-Verlaufs in den Frequenzraum um einen den Ausgangspuls repräsentierenden Amplituden-Frequenz-Verlauf zu erhalten;

- ein Mittel zum Normieren des Amplituden-Frequenz-Verlaufs um einen normierten Amplituden-Frequenz-Verlauf zu erhalten;

- ein Mittel zum Vergleichen des normierten Amplituden-Frequenz-Verlaufs mit einem vorbestimmten Referenzverlauf;

- ein Mittel zum Zuordnen des Ausgangspulsverlaufs zu einem der Pulstypen auf Grundlage des Ergebnisses des Vergleichs und zur Ausgabe des Zuordnungsergebnisses;

- ein Mittel zum Bestimmen des Referenzverlaufes;

- ein Mittel zum Bestimmen der Wichtungsfaktoren.

Dabei können die Mittel grundsätzlich jeweils sowohl durch eine Hardwarekomponente, wie einen anwenderprogrammierbaren Logikschaltkreis (FPGA), durch Software in einem geeignet eingerichteten Rechner, oder durch Firmware gebildet sein. Ebenso können die Mittel in einem digitalen Signalprozessor (DSP) implementiert sein.
Weitere vorteilhafte Ausgestaltungen, Merkmale und Details der Erfindung ergeben sich aus den abhängigen Ansprüchen, der Beschreibung des Ausführungsbeispiels und den Zeichnungen.
Die Erfindung soll nachfolgend anhand eines Ausführungsbeispiels im Zusammenhang mit den Zeichnungen näher erläutert werden. Es sind jeweils nur die für das Verständnis der Erfindung wesentlichen Elemente dargestellt. Dabei zeigt

Figur 1 eine Blockdiagramm einer Vorrichtung zur Zuordnung eines gemessenen Pulsverlaufes nach einem Ausführungsbeispiel der Erfindung;

Figur 2 eine Auftragung von Amplituden-Zeit-Verläufen für je zwei Signalpulse von zwei verschiedenen Szintillationskristallen;

Figur 3 eine Auftragung der Amplituden-Frequenzverläufe der Signalpulse von Fig. 2;

Figur 4 eine Auftragung der normierten Amplituden-Frequenz-Verläufe der Signalpulse von Fig. 2 und eines Referenzverlaufs;

Figur 5 eine Auftragung der Differenz zwischen den normierten Amplituden-Frequenz-Verläufen und dem Referenzverlauf von Fig. 4;

Figur 6 ein Diagramm, das die Wichtungsfaktoren für die Frequenzkomponenten von Fig. 5 angibt;

Figur 7 eine Auftragung der gewichteten Differenzverläufe von Fig. 5; und

Figur 8 eine Auftragung des nach dem erfindungsgemäßen Verfahren bestimmten Zuordnungsparameters für 100 Ausgangspulse von zwei verschiedenen Szintillationskristallen.

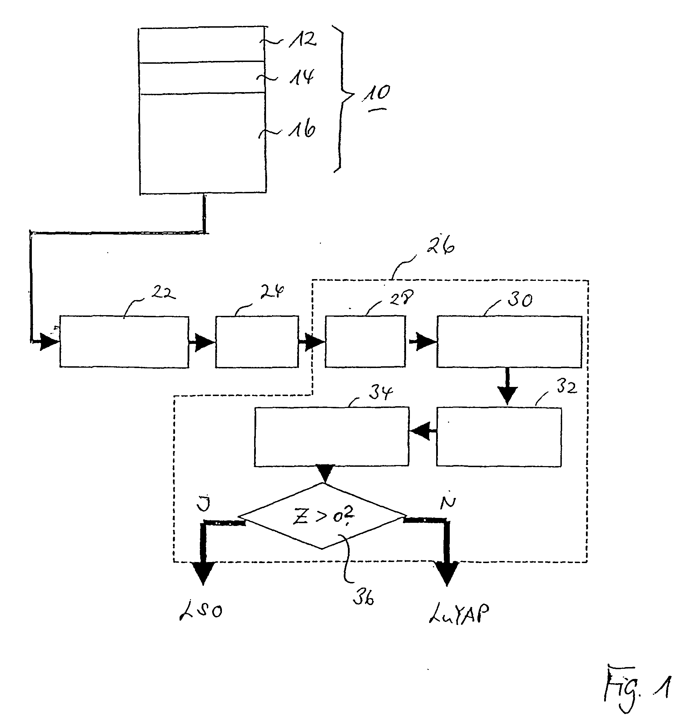

Ein Beispiel einer Anwendung des erfindungsgemäßen Verfahren zur Zuordnung eines Pulsverlaufes zu zwei Pulstypen wird nachfolgend mit Bezug auf die Figuren 1 bis 8 im Detail beschreiben.

Der verwendete Szintillationsdetektor 10 enthält zwei verschiedene Szintillationskristall-Schichten 12 und 14, die hintereinander vor einem Photodetektor 16 angeordnet sind. Der Szintillationskristall 12 besteht im Ausführungsbeispiel aus LSO (Lutetium-Oxyorthosilikat) mit einer Abklingzeit von 40 ns, und der Szintillationskristall 14 aus LuYAP ($Lu_{1-x}Y_xAlO_3$) mit einer Abklingzeit von 17 ns.

Zur Bestimmung des Referenzverlaufes und der Wichtungsfaktoren wurden zunächst Eichpulse mit bekannter Zuordnung zu dem schnellen LuYAP-Kristall oder dem langsameren LSO-Kristall aufgenommen. Die vom Photodetektor 16 gelieferten elektrischen Pulsverläufe der Eichpulse wurden mit einem Butterworth-Filter 22 zweiter Ordnung und einer Grenzfrequenz von 20 MHz tiefpaß-gefiltert. Dann wurden die Pulse mit einer Abtastrate $f_s$ von 40 MHz, entsprechend dem doppelten der Grenzfrequenz des Tiefpaßfilters von dem A-D-Wandler 24 digitalisiert.

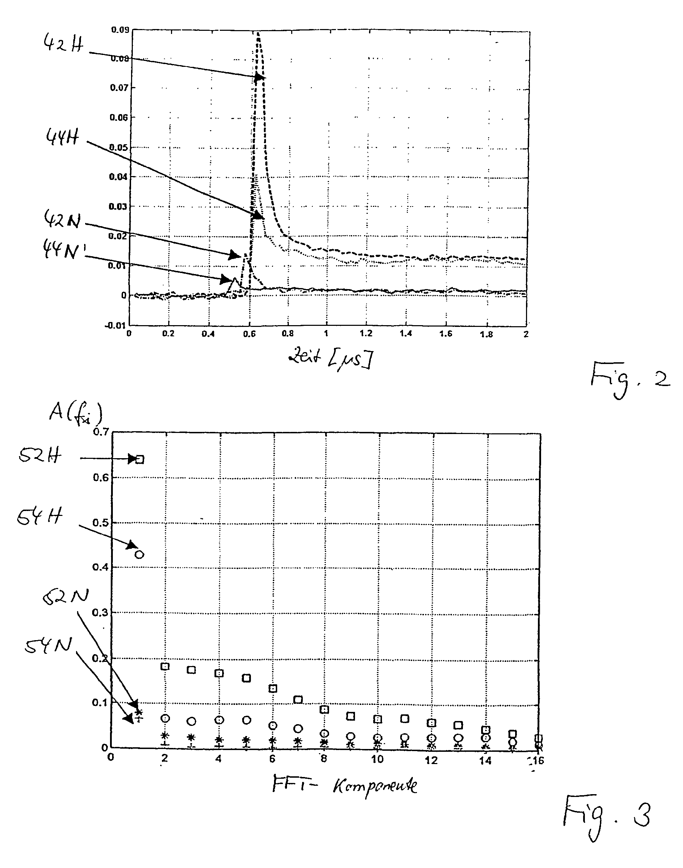

Das Ergebnis nach Tiefpaß-Filterung und Digitalisierung ist in Fig. 2 für jeweils zwei Pulse des LSO-Kristalls 12 (Bezugszeichen 42H, 42N) und des LuYAP-Kristalls 14 (Bezugszeichen 44H, 44N) gezeigt. Dabei ist zur besseren Illustration des Verfahrens jeweils ein Puls mit hoher Energie (LSO: 42H, LUYAP: 44H) und ein Puls mit niedriger Energie (LSO: 42N, LUYAP: 44N) ausgewählt und dargestellt.

Dann werden die Amplituden-Zeit-Verläufe der Zuordnungsvorrichtung 26 eingegeben, die in anwenderprogrammierbaren Logikschaltkreise 28, 30, 32, 34 und 36 umfaßt, deren Funktion aus der nachfolgenden Beschreibung deutlich wird.

Die Amplituden-Zeit-Verläufe der Eichpulse wurden zunächst mittels einer 32-Punkt-FFT fouriertransformiert (Bezugszeichen 28), wodurch bei der genannten Abtastrate eine Auflösung $\Delta f$ von 40 MHz/32 = 1,25 MHz erzielt wird.

Da sich die Pulsformen der beiden Detektoren vor allem im Bereich niedrigerer Frequenzen unterhalb von 10 MHz unterscheiden, würden auch bei einer niedrigeren Abtastrate von $f_s$ = 20 MHz, einem Tiefpaßfilter mit einer Grenzfrequenz von 10 MHz und einer 16-Punkt-FFT, bei derselben Auflösung $\Delta f$ = 1,25 MHz, gute Zuordnungsergebnisse erzielt werden. Wie weiter unten im Detail beschrieben, ergab der Rest mit der höheren Abtastrate eine sicherere Zuordnung der Pulse von 97% erfordert aber wegen der höheren Punktzahl der FFT höheren Aufwand für die Berechnung.

Das Ergebnis der 32-Punkt FFT für die vier Pulsverläufe von Fig. 2 ist in Fig. 3 dargestellt. Die i-te FFT-Komponente auf der horizontalen Achse entspricht dabei $f_i$ = (i-1)*1,25 MHz, die vertikale Achse gibt die Amplitude $A(f_i)$ der Pulsverläufe bei der Frequenz $f_i$ an. Wegen der Symmetrie der 32 FFT-Komponenten sind in der Fig. 3 nur die ersten 16 FFT-Komponenten gezeigt. Die Amplituden-Frequenz-Verläufe der vier Eichpulse sind durch Quadrate 52H (LSO, hohe Energie), Kreise 54H (LuYAP, hohe Energie), Sterne 52N (LSO, niedrige Energie) bzw. Kreuze 54N (LuYAP, niedrige Energie) dargestellt. Die unterschiedliche Gesamtenergie ist an den unterschiedlichen DC-Amplituden bei der Komponente i=1 deutlich zu erkennen.

Zur Normierung wird der Amplituden-Frequenzverlauf jeden Pulses durch seine erste Frequenzkomponente $A(f_1)$ geteilt (Bezugszeichen 30). Die resultierenden normierten Amplituden-Frequenz-Verläufe $A_N(f_i)$ sind dann nicht mehr von der Energie der Pulse abhängig.

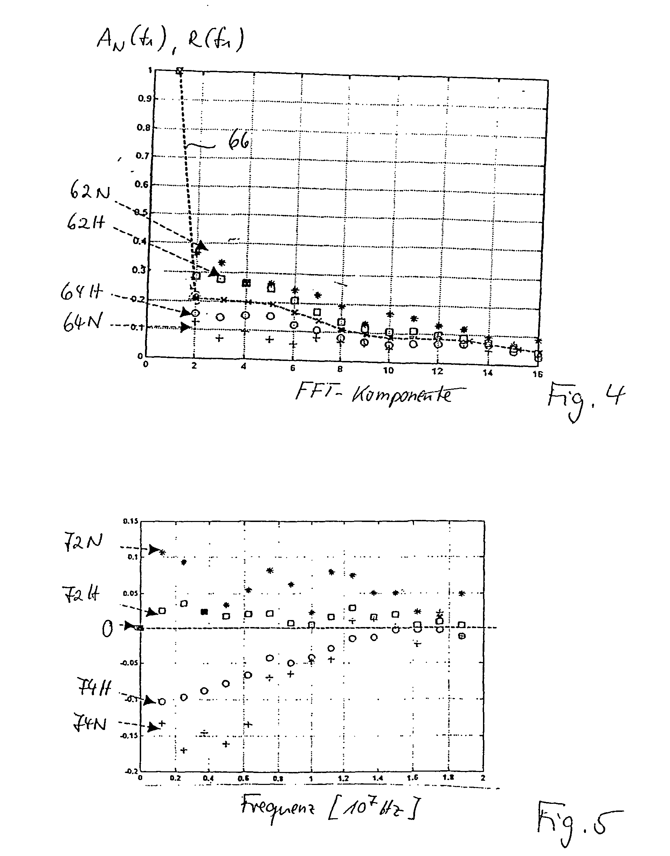

Fig. 4 zeigt die normierten Verläufe für LSO mit Bezugszeichen 62H und 62N, für LuYAP mit Bezugszeichen 64H und 64N. Wie aus der Fig. 4 deutlich zu erkennen, sind die Signale der verschiedenen Detektoren im Frequenzraum durch eine Lücke voneinander getrennt, die bei den niedrigeren Frequenzkomponenten $f_2$ bis $f_8$ besonders ausgeprägt ist. Ein Referenzverlauf 66, der in der Mitte der Lücke zwischen den beiden Pulstypen verläuft, ist ebenfalls in Fig. 4 dargestellt. Wie die Figur ebenfalls zeigt, kann mehr als eine Frequenzkomponente für die Unterscheidung der beiden Pulstypen verwenden werden.

Der Referenzverlauf 66 wurde für jede Frequenz $f_i$ dadurch erhalten, daß die Amplitudenwerte für eine Reihe von Eichpulsen jeden Pulstyps in ein Amplituden-Histogramm eingetragen wurden. Der Schnittpunkt der Einhüllenden der jeweiligen Amplituden-Histogramme ergibt den Wert des Referenzverlaufs $R(f_i)$ für diese Frequenz $f_i$.

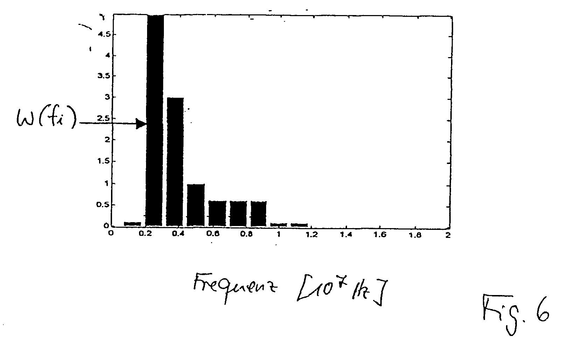

Nun wurde die Differenz zwischen den normierten Amplituden-Frequenz-Verläufen $A_N(f_i)$ und dem Referenzverlauf $R(f_i)$ berechnet (Bezugszeichen 32). Das Ergebnis zeigt Fig. 5 für die LSO-Pulse als 72H und 72N, und für die LuYAP-Pulse als 74H und 74N. Die Differenzwerte sind dabei für die LSO-Pulse größtenteils positiv, für die LuYAP-Pulse im wesentlichen negativ. Wie aus Fig. 5 ersichtlich, lassen sich die verschiedenen Pulse bei niedrigeren Frequenzkomponenten gut trennen, für höhere Frequenzkomponenten geht die Unterscheidungskraft jedoch gegen Null.

Um diesem Umstand Rechnung zu tragen, wurde für jede Frequenzkomponente ein Wichtungsfaktor $W(f_i)$ festgelegt, der ein Maß für die Eignung dieser Frequenzkomponente zur Pulstypen-Diskriminierung darstellt. Dabei wird jeweils der mittlere Betrag der Abweichung der Amplitudenwerte von dem Referenzwert für jeden der Pulstypen als Maß für die Unterscheidungseignung genommen. Aus den in Fig. 5 dargestellten Amplituden lassen sich etwa die in Fig. 6 gezeigten wichtungsfaktoren $W(f_i)$ für jede Frequenzkomponente $f_i$ bilden. Wie auch anschaulich aus Fig. 5 klar, erhalten dabei die Komponenten mit niedrigem Index, insbesondere die Frequenzkomponenten bei 2,5 MHz und 3,75 MHz, ein hohes Gewicht, während die Wichtungsfaktoren für die nicht zur Diskriminierung beitragenden höheren Frequenzen auf Null gesetzt sind.

Der so ermittelte Referenzverlauf $R(f_i)$ und die Wichtungsfaktoren $W(f_i)$ werden gespeichert, und können dann für die Zuordnung gemessener Pulsverläufe verwendet werden, deren Ursprung von einem der beiden Detektoren nicht bekannt ist, wie nachfolgend dargestellt.

Zur Illustration wird die Zuordnung anhand der bisher verwendeten Eichpulsen des LSO und des LuYAP Kristalls erläutert. Wird ein neuer Puls unbekannter Zuordnung gemessenen, so werden die oben beschriebenen Schritte mit Ausnahme der Berechnung des Referenzverlaufs und der Wichtungsfaktoren durchgeführt.

Dann wird die Differenz zwischen dem normierten Amplituden-Frequenz-Verlauf $A_N(f_i)$ und dem Referenzverlauf $R(f_i)$ für jede Frequenz mit dem Wichtungsfaktor multipliziert

$$D_W(f_i) = W(f_i) * (A_N(f_i) - R(f_i))$$

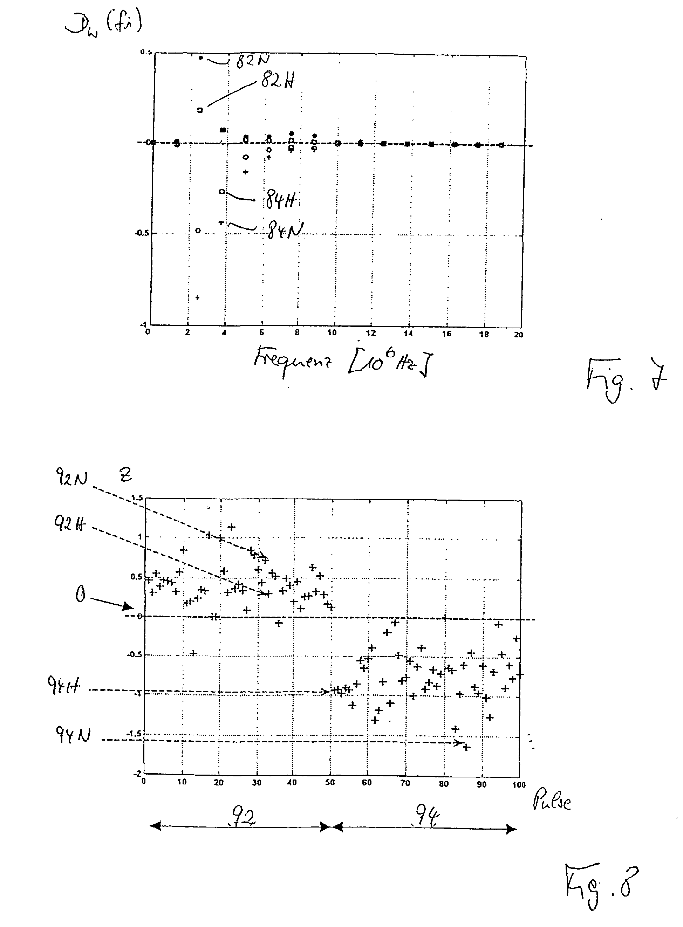

um eine gewichtete Differenz $D_W(f_i)$ zu erhalten (Bezugszeichen 34). Die so gewichteten Werteverläufe sind in der Fig. 7 für die LSO-Pulse als 82H bzw. 82N und für die LuYAP-Pulse als 84H und 84N dargestellt.

Ein Aufsummieren über die Beiträge von allen Frequenzen ergibt dann den Zuordnungsparameter Z für jeden Puls (Bezugszeichen 34). Zu Zuordnung genügt das Vorzeichen von Z. Ein positiver Wert von Z führt zu einer Einordnung des gemessenen Pulses als Signal des LSO-Kristalls, ein negativer Wert zu einer Einordnung als Signal des LuYAP-Kristalls (Bezugszeichen 36).

Zur Untersuchung der Zuverlässigkeit des erfindungsgemäßen Verfahrens wurden nach einmaliger Festlegung des Referenzverlaufs $R(f_i)$ und der Wichtungsfaktoren $W(f_i)$ einhundert Ausgangspulse, fünfzig des LSO-Kristalls und fünfzig des LuYAP-Kristalls nach dem vorstehenden erläuterten Verfahren zugeordnet. Figur 8 zeigt jeweils den Zuordnungsparameter Z für die LSO-Pulse (Bezugszeichen 92) und die LuYAP-Pulse (Bezugszeichen 94). Die Z-Werte für die vier Eichpulse sind als 92H, 92N, 94H und 94N ebenfalls eingezeichnet. Wie aus der Figur ersichtlich, führt das erfindungsgemäße Verfahren bei 97% der Pulse zu einer korrekten Zuordnung.

**Patentansprüche**

1. Verfahren zur Zuordnung eines Pulsverlaufes zu einem von einer Mehrzahl von Pulstypen verschiedener Abklingzeit, insbesondere eines Pulsverlaufes eines Szintillationsdetektors mit zumindest zwei Szintillationsmaterialien unterschiedlicher Abklingcharakteristik, umfassend die Verfahrenschritte:

   - Aufnehmen eines Ausgangspulsverlaufes und Wandeln des Pulsverlaufes in ein elektrisches Signal, dessen Amplituden-Zeit-Verlauf den Pulsverlauf des Ausgangspulses repräsentiert;
   - Transformieren des Amplituden-Zeit-Verlaufs in den Frequenzraum um einen den Ausgangspuls repräsentierenden Amplituden-Frequenz-Verlauf zu erhalten;
   - Normieren des Amplituden-Frequenz-Verlaufs um einen normierten Amplituden-Frequenz-Verlauf zu erhalten;
   - Vergleichen des normierten Amplituden-Frequenz-Verlaufs mit einem vorbestimmten Referenzverlauf; und
   - Zuordnen des Ausgangspulsverlaufs zu einem der Pulstypen auf Grundlage des Ergebnisses des Vergleichs.

2. Verfahren nach Anspruch 1, **dadurch gekennzeichnet, daß** das elektrische Signal vor der Transformation in den Frequenzraum einer Analog/Digital-Wandlung mit einer vorbestimmten Abtastrate unterzogen wird, um einen den Ausgangspuls repräsentierenden, diskreten Amplituden-Zeit-Verlauf zu erhalten.

3. Verfahren nach Anspruch 2, **dadurch gekennzeichnet, daß** bei dem Schritt des Transformierens der diskrete Amplituden-Zeit-Verlauf einer diskreten Fouriertransformation (DFT) unterzogen wird, um einen diskreten Amplituden-Frequenz-Verlauf zu erhalten.

4. Verfahren nach Anspruch 3, **dadurch gekennzeichnet, daß** die diskrete Fouriertransformation mit einer schnellen Fouriertransformation (FFT) berechnet wird.

5. Verfahren nach einem der vorigen Ansprüche, **dadurch gekennzeichnet, daß** bei dem Schritt des Normierens der Amplituden-Frequenz-Verlauf auf die Amplitude bei der Frequenz Null bezogen wird, insbesondere daß der Amplituden-Frequenz-Verlauf durch die Amplitude bei der Frequenz Null geteilt wird.

6. Verfahren nach einem der vorigen Ansprüche, **dadurch gekennzeichnet, daß** bei dem Schritt des Vergleichens der Differenz-Verlauf des normierten Amplituden-Frequenz-Verlaufs und des Referenzverlaufs gebildet wird, der Differenz-Verlauf für jede Frequenz mit einem vorbestimmten Wichtungsfaktor multipliziert wird, und als Zuordnungsparameter die Summe dieser Produkte über alle Frequenzen berechnet wird.

7. Verfahren nach Anspruch 6, **dadurch gekennzeichnet, daß** die Zuordnung zu einem der Pulstypen auf Grundlage des Vorzeichens und/oder des Betrags des Zuordnungsparameters erfolgt.

8. Verfahren nach Anspruch 6 oder 7, **dadurch gekennzeichnet, daß** der Ausgangspulsverlauf zu einem von zwei Pulstypen verschiedener Abklingzeit zugeordnet wird, und die Zuordnung auf Grundlage nur des Vorzeichens des Zuordnungsparameters erfolgt.

9. Verfahren nach einem der Ansprüche 6 bis 9, **dadurch gekennzeichnet, daß** der Wichtungsfaktor ein Maximum bei kleinen Frequenzen hat und zu großen Frequenzen hin abnimmt.

10. Verfahren nach einem der vorigen Ansprüche, **dadurch gekennzeichnet, daß** hochfrequente Komponenten des elektrischen Signals vor der Transformation in den Frequenzraum durch ein Tiefpaßfilter unterdrückt werden.

11. Verfahren nach einem der vorigen Ansprüche, **dadurch gekennzeichnet, daß** vor dem Aufnehmen zuzuordnender Pulsverläufe ein Referenzverlauf bestimmt wird durch

- Aufnehmen von Eichpulsverläufen mit bekannter Zuordnung zu zwei Pulstypen mit verschiedener Abklingzeit und Wandeln jeweils des Pulsverlaufes in ein elektrisches Signal, dessen Amplituden-Zeit-Verlauf den Pulsverlauf des Eichpulses repräsentiert;
- Transformieren jeweils des Amplituden-Zeit-Verlaufs in den Frequenzraum um einen den Eichpuls repräsentierenden Amplituden-Frequenz-Verlauf zu erhalten;
- Normieren des Amplituden-Frequenz-Verlaufs um einen normierten Amplituden-Frequenz-Verlauf zu erhalten; und
- Festlegen eines Referenzwertes für jede Frequenz derart, daß die Amplitudenwerte der Eichpulse des ersten Pulstyps für diese Frequenz im wesentlichen größer als der Referenzwert, und die Amplitudenwerte der Eichpulse des zweiten Pulstyps für diese Frequenz im wesentlichen kleiner als der Referenzwert sind.

12. Verfahren nach Anspruch 11, **dadurch gekennzeichnet, daß** der Referenzwert für jede Frequenz **dadurch** festgelegt wird, daß jeweils ein Amplituden-Histogramm für die verschiedenen Pulstypen aufgestellt wird, der Schnittpunkt der Einhüllenden der Histogramme bestimmt wird, und der bestimmte Schnittpunkt als der Referenzwert festgelegt wird.

13. Verfahren nach Anspruch 11 oder 12, **dadurch gekennzeichnet, daß** vor dem Aufnehmen zuzuordnender Pulsverläufe der Wichtungsfaktor für jede Frequenz bestimmt wird durch

- Bestimmen des mittleren Betrags der Abweichung der Amplitudenwerte von dem Referenzwert für diese Frequenz für jeden der Pulstypen; und
- Festlegen eine hohen Wichtung für diese Frequenz bei einem großen mittleren Abweichungsbetrag und einer niedrigen Wichtung für diese Frequenz bei einem niedrigen mittleren Abweichungsbetrag.

14. Vorrichtung zur Durchführung des Verfahrens nach einem der Ansprüche 1 bis 13, mit

- einem Mittel zum Aufnehmen eines Ausgangspulsverlaufes und einem Mittel (10) zum Wandeln des Pulsverlaufes in ein elektrisches Signal, dessen Amplituden-Zeit-Verlauf den Pulsverlauf des Ausgangspulses repräsentiert;
- einem Mittel (28) zum Transformieren des Amplituden-Zeit-Verlaufs in den Frequenzraum um einen den Ausgangspuls repräsentierenden Amplituden-Frequenz-Verlauf zu erhalten;
- einem Mittel (30) zum Normieren des Amplituden-Frequenz-Verlaufs um einen normierten Amplituden-Frequenz-Verlauf zu erhalten;
- einem Mittel (32,34) zum Vergleichen des normierten Amplituden-Frequenz-Verlaufs mit einem vorbestimmten Referenzverlauf; und
- einem Mittel (36) zum Zuordnen des Ausgangspulsverlaufs zu einem der Pulstypen auf Grundlage des Ergebnisses des Vergleichs und zur Ausgabe des Zuordnungsergebnisses.

15. Vorrichtung nach Anspruch 14, bei dem das Mittel (32,34) zum Vergleichen und das Mittel (36) zum Zuordnen durch einen anwenderprogrammierbaren Logikschaltkreis (FPGA) oder einen digitalen Signalprozessor (DSP) oder (PC) gebildet ist.

16. Vorrichtung nach Anspruch 15, bei dem das Mittel (28) zum Transformieren und das Mittel (30) zum Normieren durch einen anwenderprogrammierbaren Logikschaltkreis (FPGA) oder einen digitalen Signalprozessor (DSP) oder (PC) gebildet ist.

**Claims**

1. A method for assigning a pulse profile, in particular a pulse profile of a scintillation detector having at least two scintillation materials with different decay characteristics, to one of a plurality of pulse types with differing decay times, comprising the method steps of

   - acquiring an output pulse profile and converting the pulse profile into an electrical signal whose amplitude-time profile represents the pulse profile of the output pulse;
   - transforming the amplitude-time profile into the frequency space in order to obtain an amplitude-frequency profile representing the output pulse;
   - normalizing the amplitude-frequency profile in order to obtain a normalized amplitude-frequency profile;
   - comparing the normalized amplitude-frequency profile with a predetermined reference profile; and
   - assigning the output pulse profile to one of the pulse types on the basis of the result of the comparison.

2. The method as defined in Claim 1, wherein the electrical signal is subjected, prior to the transformation into the frequency space, to an analog/digital conversion with a predetermined sampling rate, in order to obtain a discrete amplitude-time profile representing the output pulse.

3. The method as defined in Claim 2, wherein in the transforming step, the discrete amplitude-time profile is subjected to a discrete Fourier transform (DFT) in order to obtain a discrete amplitude-frequency profile.

4. The method as defined in Claim 3, wherein the discrete Fourier transform is calculated using a fast Fourier transform (FFT).

5. The method as defined in any of the foregoing claims, wherein in the normalizing step, the amplitude-frequency profile is referred to the amplitude at a frequency of zero; in particular, the amplitude-frequency profile is divided by the amplitude at a frequency of zero.

6. The method as defined in any of the foregoing claims, wherein in the comparison step, the difference profile between the normalized amplitude-frequency profile and the reference profile is determined, the difference profile for each frequency is multiplied by a predetermined weighting factor, and the sum of those products over all frequencies is calculated as the assignment parameter.

7. The method as defined in Claim 6, wherein the assignment to one of the pulse types is performed on the basis of the sign and/or the absolute value of the assignment parameter.

8. The method as defined in Claim 6 or 7, wherein the output pulse profile is assigned to one of two pulse types with differing decay times, and the assignment is performed only on the basis of the sign of the assignment parameter.

9. The method as defined in any of Claims 6 through 9, wherein the weighting factor has a maximum at small frequencies and decreases toward large frequencies.

10. The method as defined in any of the foregoing claims, wherein high-frequency components of the electrical signal are suppressed by a lowpass filter before transformation into the frequency space.

11. The method as defined in any of the foregoing claims, wherein prior to the acquisition of pulse profiles that are to be assigned, a reference profile is determined by

    - acquiring calibration pulse profiles having a known assignment to two pulse types with differing decay times, and converting the respective pulse profiles into an electrical signal whose amplitude-time profile represents the pulse profile of the calibration pulse;

- transforming the respective amplitude-time profile into the frequency space in order to obtain an amplitude-frequency profile representing the calibration pulse;
- normalizing the amplitude-frequency profile in order to obtain a normalized amplitude-frequency profile; and
- defining a reference value for each frequency in such a way that the amplitude values of the calibration pulses of the first pulse type for that frequency are substantially greater than the reference value, and the amplitude values of the calibration pulses of the second pulse type for that frequency are substantially less than the reference value.

12. The method as defined in Claim 11, wherein the reference value for each frequency is defined by the fact that an amplitude histogram is prepared for each of the various pulse types, the intersection point of the envelopes of the histograms is identified, and the identified intersection point is defined as the reference value.

13. The method as defined in Claim 11 or 12, wherein prior to the acquisition of pulse profiles to be assigned, the weighting factor is determined for each frequency by

- determining the average magnitude of the deviation of the amplitude values from the reference value for that frequency, for each of the pulse types; and
- defining a high weighting for that frequency for a large average deviation magnitude, and a low weighting for that frequency for a low average deviation magnitude.

14. An apparatus for carrying out the method described as defined in any of Claims 1 through 13, comprising

- a means for acquiring an output pulse profile and a means (10) for converting the pulse profile into an electrical signal whose amplitude-time profile represents the pulse profile of the output pulse;
- a means (28) for transforming the amplitude-time profile into the frequency space in order to obtain an amplitude-frequency profile representing the output pulse;
- a means (30) for normalizing the amplitude-frequency profile in order to obtain a normalized amplitude-frequency profile;
- a means (32, 34) for comparing the normalized amplitude-frequency profile with a predetermined reference profile; and
- a means (36) for assigning the output pulse profile to one of the pulse types on the basis of the result of the comparison, and for outputting the assignment result.

15. The apparatus as defined in Claim 14, in which the means (32, 34) for comparing and the means (36) for assigning are constituted by a user-programmable logic circuit (FPGA) or a digital signal processor (DSP) or (PC).

16. The apparatus as defined in Claim 15, in which the means (28) for transforming and the means (30) for normalizing are constituted by a user-programmable logic circuit (FPGA) or a digital signal processor (DSP) or (PC).

**Revendications**

1. Procédé pour l'affectation d'une courbe d'impulsion à un parmi une pluralité de types d'impulsion à constante de décroissance différente, particulièrement d'une courbe d'impulsion d'un détecteur de scintillation avec au moins deux matériaux de scintillation ayant une caractéristique de décroissance différente, comprenant les suivantes étapes de procédé:

- enregistrement d'une courbe d'impulsion de sortie et conversion de la courbe d'impulsion dans un signal électrique dont la courbe amplitude-temps représente la courbe de l'impulsion de sortie;
- transformation de la courbe amplitude-temps dans l'étendue de fréquence pour obtenir une courbe amplitude-de-fréquence représentant l'impulsion de sortie;
- normalisation de la courbe amplitude-fréquence pour obtenir une courbe amplitude-fréquence normalisée;
- comparaison de la courbe amplitude-fréquence normalisée à une courbe de référence prédéfinie; et
- affectation de la courbe d'impulsion de sortie à l'un des types d'impulsion en fonction du résultat de la comparaison.

2. Procédé selon la revendication 1, **caractérisé en ce que**, le signal électrique avant de la transformation dans l'étendue de fréquence est soumis à une transformation analogue/digitale avec une vitesse d'exploration prédéfinie pour obtenir une courbe amplitude-temps discrète représentant l'impulsion de sortie.

3. Procède selon la revendication 2, **caractérisé en ce que**, à l'étape de transformation de la courbe amplitude-temps discrète est soumise à une transformation Fourier discrète (DFT), pour obtenir une courbe amplitude-fréquence discrète.

4. Procédé selon la revendication 3, **caractérisé en ce que**, la transformation Fourier discrète est calculée avec une transformation Fourier rapide (FFT).

5. Procédé selon l'une des revendications antérieures, **caractérise en ce que**, à l'étape de normalisation la courbe amplitude-fréquence est rapportée à l'amplitude à fréquence zéro, particulièrement **en ce que** la courbe amplitude-fréquence est divisée par l'amplitude à la fréquence zéro.

6. Procédé selon l'une des revendications antérieures, **caractérise en ce que**, à l'étape de comparaison, on forme la courbe différentielle de la courbe amplitude-fréquence normalisée et de la courbe de référence, pour chaque fréquence la courbe différentielle sera multipliée avec un facteur d'ajustement prédéfini, et comme paramètre d'affectation on calcule la somme de ces produits à toutes les fréquences.

7. Procédé selon la revendication 6, **caractérise en ce que**, l'affectation à l'un des types d'impulsion a lieu en fonction du signe et/ou la valeur du paramètre d'affectation.

8. Procédé selon la revendication 6 ou 7, **caractérise en ce que**, la courbe d'impulsion de sortie est affectée à l'un des deux types d'impulsion à constante de décroissance différente, et l'affectation a lieu seulement sur la base du signe du paramètre d'affectation.

9. Procédé selon l'une des revendications 6 à 9, **caractérise en ce que**, le facteur d'ajustement a un maximum aux fréquences basses et décroît vers les fréquences élevées.

10. Procédé selon l'une des revendications antérieures, **caractérise en ce que**, les composantes de fréquence élevée du signal électrique avant de transformation dans l'étendue de fréquence sont supprimées par un filtre passe bas.

11. Procédé selon l'une des revendications antérieures, **caractérise en ce que**, avant de l'enregistrement des courbes d'impulsion qui vont être affectées, on établit une courbe de référence par:

  - enregistrement de la courbe d'impulsion étalon avec affectation connue à deux types d'impulsion à constante de décroissance différente et la conversion de chaque courbe d'impulsion dans un signal électrique dont la courbe amplitude-temps représente la courbe d'impulsion de l'impulsion étalon;
  - transformation de chaque courbe amplitude-temps dans l'étendue de fréquence pour obtenir une courbe amplitude-fréquence représentant l'impulsion étalon;
  - normalisation de la courbe amplitude-fréquence pour obtenir une courbe amplitude-fréquence normalisée; et
  - établissement d'une valeur de référence pour chaque fréquence, de sorte que les valeurs d'amplitude de l'impulsion étalon du premier type d'impulsion, pour cette fréquence soient en essence plus grandes que la valeur de référence, et les valeurs d'amplitude de l'impulsion étalon pour le deuxième type d'impulsion pour cette fréquence soient en essence plus petites que la valeur de référence.

12. Procédé selon la revendication 11, **caractérise en ce que**, la valeur de référence pour chaque fréquence est établie **en ce qu'**on établit un histogramme des amplitudes pour les types d'impulsion différents, on détermine le point d'intersection des enveloppes des histogrammes et le point d'intersection déterminé sera établi comme valeur de référence.

13. Procédé selon la revendication 11 ou 12, **caractérise en ce qu'**, avant de l'enregistrement des courbes d'impulsion qui vont être affectées, en établit le facteur d'ajustement pour chaque fréquence par:

  - détermination de la valeur moyenne de l'écart des valeurs d'amplitude à l'égard la valeur de référence pour cette fréquence pour chacun des types d'impulsion; et
  - établissement d'un ajustement plus grand pour cette fréquence à une valeur moyenne de l'écart plus grande et d'un ajustement plus petit pour cette fréquence à une valeur moyenne de l'écart plus petite.

**14.** Dispositif pour la réalisation du procédé selon l'une des revendications 1 à 13, avec

- un moyen pour l'enregistrement d'une courbe d'impulsion de sortie et un moyen (10) pour la conversion de la courbe d'impulsion dans un signal électrique, dont la courbe amplitude-temps représente la courbe d'impulsion de l'impulsion de sortie;
- un moyen (28) pour transformer la courbe amplitude-fréquence dans l'étendue de fréquence pour obtenir une courbe amplitude-fréquence représentant l'impulsion de sortie;
- un moyen (30) pour la normalisation de la courbe amplitude-fréquence pour obtenir une courbe amplitude-fréquence normalisée;
- un moyen (32, 34) pour comparer la courbe amplitude-fréquence normalisée avec une courbe de référence prédéfinie; et
- un moyen (36) pour l'affectation de la courbe d'impulsion de sortie à l'un des types d'impulsion en fonction du résultat de la comparaison et pour l'indication du résultat de l'affectation.

**15.** Dispositif selon la revendication 14, où le moyen (32, 34) pour comparaison et le moyen (36) pour affectation est réalisé par l'intermédiaire d'un circuit logique programmable par l'utilisateur (FPGA) ou d'un processeur de signal digital (DSP) ou (PC).

**16.** Dispositif selon la revendication 15, où le moyen (28) pour transformation et le moyen (30) pour normalisation est réalisé par l'intermédiaire d'un circuit logique programmable par l'utilisateur (FPGA) ou d'un processeur de signal digital (DSP) ou (PC).

Fig. 1

42H

44H

42N

44N'

Zeit [μs]

Fig. 2

A(fᵢ)

52H

54H

52N

54N

FFT- Komponente

Fig. 3

$A_N(f_1), R(f_1)$

FFT- Komponente

Fig. 4

Frequenz [$10^7$ Hz]

Fig. 5

$\omega(f_i)$

Frequenz $[10^7 \, Hz]$

Fig. 6

Fig. 7

Fig. 8